# EUROPÄISCHE PATENTSCHRIFT

(11) **EP 3 715 905 B1**
(45) Veröffentlichungstag und Bekanntmachung des Hinweises auf die Patenterteilung: **22.09.2021**
(21) Anmeldenummer: 20162297.4
(22) Anmeldetag: 11.03.2020
(51) Int. Cl.: G01S 7/481, G01S 7/4865, G01S 7/487, G01S 17/06, G01S 17/88, G01S 17/931

(54) **VERFAHREN ZUM BETREIBEN EINES ABSTANDSMESSENDEN ÜBERWACHUNGSSENSORS UND ABSTANDSMESSENDER ÜBERWACHUNGSSENSOR**
METHOD FOR OPERATING A DISTANCE MEASURING MONITORING SENSOR AND DISTANCE MEASURING MONITORING SENSOR
PROCÉDÉ DE FONCTIONNEMENT D'UN CAPTEUR DE SURVEILLANCE DE MESURE DE DISTANCE ET CAPTEUR DE SURVEILLANCE DE MESURE DE DISTANCE

(30) Priorität: 26.03.2019 DE 102019107681
(43) Veröffentlichungstag der Anmeldung: 30.09.2020
(73) Patentinhaber: SICK AG, 79183 Waldkirch (DE)
(72) Erfinder: JACHMANN, Fabian, 79102 Freburg (DE)
(74) Vertreter: Manitz Finsterwald Patent- und Rechtsanwaltspartnerschaft mbB

(56) Entgegenhaltungen:
- DE-B3-102012 112 987

## Beschreibung

Die vorliegende Erfindung betrifft ein Verfahren zum Betreiben eines abstandsmessenden Überwachungssensors zur Erfassung und Positionsbestimmung von Objekten in einem zumindest zweidimensionalen Schutzfeld, wobei der Überwachungssensor zumindest einen Lichtsender, welcher zum Aussenden von Lichtpulsen in das Schutzfeld eingerichtet ist, zumindest einen Lichtempfänger, welcher dazu eingerichtet ist, von zumindest einem gegebenenfalls in dem Schutzfeld vorhandenen Objekt reflektierte oder remittierte Lichtpulse als Empfangslichtpulse zu empfangen, und einer Ablenkeinheit, welche zum periodischen Abtasten zumindest des Schutzfeldes mit den ausgesendeten Lichtpulsen eingerichtet ist, wobei aus einem Drehwinkel der Ablenkeinheit und aus dem in Abhängigkeit von der Laufzeit eines jeweiligen Empfangslichtpulses ermittelten Abstand die jeweilige Position des zumindest einen Objekts bestimmbar ist.

Ein derartiger abstandsmessender Überwachungssensor wird auch als Scanner bezeichnet und kann beispielsweise als Laserscanner ausgebildet sein. Ein von dem Lichtsender, z.B. einem Laser oder dergleichen, erzeugter Sendelichtpuls wird über die Ablenkeinheit in das zu überwachende Schutzfeld gelenkt und dort von einem gegebenenfalls vorhandenen Objekt reflektiert oder remittiert. Das reflektierte bzw. remittierte Licht gelangt wieder zurück zu dem Überwachungssensor und wird dort von dem Lichtempfänger detektiert. Die Ablenkeinheit ist in der Regel schwenkbar bzw. drehbar ausgestaltet, so dass ein jeweiliger von dem Lichtsender erzeugter Lichtpuls einen der Schwenk- oder Drehbewegung entsprechenden Teil des Schutzfeldes überstreicht. Die Ablenkeinheit kann insbesondere Spiegel und/oder Optiken umfassen, mit deren Hilfe die gesendeten Lichtpulse und gegebenenfalls auch die empfangenen Lichtpulse in eine gewünschte Richtung abgelenkt oder umgelenkt werden, wobei die Richtung, in welche ein jeweiliger Lichtpuls ausgesendet wird und aus welcher ggf. ein zugeordneter Empfangslichtpuls empfangen wird, durch die aktuelle Winkelstellung bzw. den aktuellen Drehwinkel bestimmt ist. Wenn der Lichtempfänger einen oder mehrere Empfangslichtpulse als ein jeweiliges, einem bestimmten Sendelichtpuls zugeordnetes Empfangssignal aus dem Schutzfeld empfängt, so kann aus der aktuellen Winkelstellung bzw. dem aktuellen Drehwinkel der Ablenkeinheit auf die Winkellage des Objekts in dem Schutzfeld geschlossen werden. In der Regel wird bei jedem Drehwinkel ein Lichtpuls ausgesendet und ein zugeordnetes Empfangssignal empfangen, wobei grundsätzlich aber auch mehrere Lichtpulse je Drehwinkel ausgesendet werden können. Somit wird das Schutzfeld gemäß einer Folge von diskreten Drehwinkeln abgetastet. Auf der Grundlage der Laufzeit eines Lichtpulses, d.h. der Zeitdauer zwischen dem Aussenden des Lichtpulses und dem Empfangen des zugehörigen Empfangslichtpulses durch den Lichtempfänger, kann der Abstand des Objekts von dem Überwachungssender ermittelt werden. Aus der Winkellage und dem zugehörigen Abstand kann dann die Position eines jeweiligen Objekts bestimmt werden.

Somit kann der Überwachungssensor sozusagen ein "Abbild" des überwachten Schutzfeldes erzeugen.

Mit Hilfe einer weitergehenden Auswertung der erfassten Empfangslichtpulse kann insbesondere festgestellt werden, ob sich innerhalb des Schutzfeldes ein unzulässiges Objekt befindet.

So werden gattungsgemäße Überwachungssensoren zum Beispiel bei stationären oder beweglichen Maschinen oder Fahrzeugen eingesetzt, bei denen aus Sicherheitsgründen ein Gefahrenbereich überwacht werden muss, der beim Betrieb der Maschine oder des Fahrzeugs von Personen oder von Gegenständen nicht verletzt werden darf. Wenn durch den Überwachungssensor die Anwesenheit eines unzulässigen Objektes, beispielsweise eines Gliedmaßes einer Bedienperson, im Gefahrenbereich festgestellt wird, kann durch den Überwachungssensor ein Objekterfassungssignal ausgegeben werden, welches beispielsweise ein Abschalten der Maschine, ein Anhalten des Fahrzeugs oder dergleichen bewirken kann.

Allerdings können kleine Partikel wie in das Schutzfeld eindringender Staub, umherfliegende Späne, Regentropfen oder Schneeflocken zu einem unnötigen oder unerwünschten Abschalten der Maschine oder Anhalten des Fahrzeugs führen. Derartige falsch-positive Objekterfassungssignale reduzieren die Verfügbarkeit der Maschine bzw. des Fahrzeugs.

Um diesen Nachteil zu vermeiden, kann beispielweise das Konzept der sogenannten Mehrfachauswertung angewendet werden. Dieses Konzept sieht vor, dass jeweils zwei oder mehr aufeinanderfolgende Abtastzyklen des Schutzfeldes betrachtet werden, wobei ein Objekt in jedem dieser Abtastzyklen an derselben Stelle oder innerhalb einer definierten Umgebung detektiert werden muss, um ein Objekterfassungssignal auszulösen. Dabei wird angenommen, dass solche Objekte, die ein falsch-positives Objekterfassungssignal auslösen könnten, sich relativ rasch bewegen und daher nur in einem Teil der betrachteten Abtastzyklen und/oder in allen Abtastzyklen, jedoch an sehr weit voneinander entfernten, Positionen erfasst werden.

Durch eine derartige Mehrfachauswertung wird zwar die Robustheit des Sensors gegenüber Störungen erhöht, die auf kleinen okkludierenden Objekten oder Partikeln wie Insekten, Regentropfen, Materialspänen oder Schneeflocken beruhen, so dass sich die Verfügbarkeit einer durch den Sensor überwachten Maschine erhöht. Allerdings erhöht sich mit der Anzahl der auszuwertenden Abtastzyklen auch die Ansprechzeit des Sensors, da ein mehrfaches Abtasten entsprechend mehr Zeit benötigt. Eine erhöhte Ansprechzeit kann es aber beispielsweise erforderlich machen, die Arbeitsgeschwindigkeit der überwachten Maschine zu reduzieren, da zum Beispiel gewährleistet sein muss, dass ein sicheres Anhalten stattgefunden hat, bevor sich das Objekt (also zum Beispiel eine gefährdete Person) der Maschine genähert hat oder sich die Maschine (zum Beispiel ein fahrerloses Transportsystem) einer gefährdeten Person genähert hat.

Bei einem anderen Lösungsansatz wird ausgenutzt, dass bei der Anwesenheit von okkludierenden Partikeln für einen jeweiligen ausgesendeten Lichtpuls auch mehrere kurz nacheinander eintreffende Empfangslichtpulse empfangen werden können, was darauf zurückzuführen ist, dass ein ausgesendeter Lichtpuls zuerst auf ein kleines Objekt trifft, welches nur einen Teil des Lichtpulses remittiert, wobei der nicht remittierte Teil des Lichtpulses gegebenenfalls auf ein weiteres, sich in größerem Abstand von dem Überwachungssensor befindenden Objekt treffen kann und von diesem ebenfalls remittiert wird. Der Überwachungssensor empfängt demnach für einen bestimmten Drehwinkel zwei oder auch mehr Empfangslichtpulse. Jedem dieser Empfangslichtpulse kann ein bestimmter Abstand zugeordnet werden.

Bei einem in EP 2 899 705 B1 beschriebenen Verfahren, welches auf dem vorstehend genannten Lösungsansatz beruht, werden die Empfangslichtpulse derart ausgewertet, dass ein relativer Abstand zwischen den Reflexionsorten der zugehörigen Empfangslichtpulse ermittelt wird. Die Abstandsdifferenz wird dann mit einem vorgegebenen Abstandswert verglichen. Wenn die Abstandsdifferenz größer gleich dem vorbestimmten Abstandswert ist, werden die Abstandsdaten in einem ersten Speicher zwischengespeichert, ansonsten in einem zweiten temporären Speicher. Anschließend erfolgt eine statistische Auswertung der beiden temporären Zwischenspeicher, wobei in Abhängigkeit von bestimmten Kriterien entschieden wird, ob ein Objekterfassungssignal auf der Grundlage der in dem ersten oder der in dem zweiten Zwischenspeicher gespeicherten Abstandsdaten erzeugt wird.

Ein Verfahren zum Betreiben eines abstandsmessenden Überwachungssensors mit den Merkmalen des Oberbegriffes des Anspruches 1 ist in DE 10 2012 112 987 B3 beschrieben.

Es ist die Aufgabe der Erfindung, ein Verfahren der eingangs genannten Art anzugeben, bei dem zur Vermeidung der Erzeugung von falsch-positiven Objekterfassungssignalen Kriterien geprüft werden, die es ermöglichen, eine Entscheidung zu treffen, ob ein erfasstes Objekt als sicherheitskritisch oder als unkritisch anzusehen ist.

Die Lösung der Aufgabe erfolgt durch ein Verfahren mit den Merkmalen des Anspruchs 1. Das erfindungsgemäße Verfahren umfasst die Schritte:
a) Erfassen eines jeweiligen Erfassungssignals, welches einen jeweiligen zeitlichen Verlauf eines von dem Lichtempfänger für einen jeweiligen Drehwinkel empfangenen Empfangssignals umfasst,
b) Ermitteln der Anzahl von Empfangslichtpulsen, welche in einem jeweiligen Erfassungssignal enthalten sind, wobei derjenige Empfangslichtpuls mit der kürzesten Laufzeit einen ersten Empfangslichtpuls und ein gegebenenfalls vorhandener Empfangslichtpuls mit einer längeren Laufzeit einen zweiten Empfangslichtpuls darstellt,
c) Erzeugen eines Detektionssignals für ein jeweiliges erfasstes Objekt, wobei das Detektionssignal Informationen über die ermittelte Position des Objekts umfasst, wobei das Verfahren zumindest die drei folgenden Prüfbedingungen umfasst und das Ermitteln der Position das Bestimmen des Abstandes in Abhängigkeit von einem jeweiligen logischen Wahrheitswert zumindest einer der Prüfbedingungen erfolgt, wobei
   - gemäß einer ersten Prüfbedingung geprüft wird, ob die Anzahl von Empfangslichtpulsen in einem jeweiligen Empfangssignal gleich 1 ist,
   - gemäß einer zweiten Prüfbedingung geprüft wird, ob für zumindest einen benachbarten Drehwinkel ein Vergleichsobjekt erfasst wurde, dessen zugeordneter Empfangslichtpuls die gleiche oder zumindest im Wesentlichen (das heißt insbesondere im Rahmen der Messgenauigkeit des Überwachungssensors) die gleiche Laufzeit aufweist wie der erste Empfangslichtpuls,
   - gemäß einer dritten Prüfbedingung geprüft wird, ob für zumindest einen benachbarten Drehwinkel ein Reflektor erfasst wurde, dessen zugeordneter Empfangslichtpuls die gleiche oder zumindest im Wesentlichen (das heißt insbesondere im Rahmen der Messgenauigkeit des Überwachungssensors) die gleiche Laufzeit aufweist wie der zweite Empfangslichtpuls,
wobei in einem ersten Prüfschritt die erste Prüfbedingung, in einem gegebenenfalls durchgeführten zweiten Prüfschritt entweder die zweite oder die dritte Prüfbedingung und in einem gegebenenfalls durchgeführten dritten Prüfschritt die bis dahin nicht geprüfte dritte oder zweite Prüfbedingung geprüft wird, und
wobei das Bestimmen des Abstandes auf der Grundlage der für den zweiten Empfangslichtpuls ermittelten Laufzeit erfolgt, wenn der Wahrheitswert der ersten, zweiten und dritten Prüfbedingung jeweils FALSCH ist, und ansonsten auf der Grundlage der für den ersten Empfangslichtpuls ermittelten Laufzeit erfolgt.

Bei dem erfindungsgemäßen Verfahren wird ausgenutzt, dass der Überwachungssensor in bestimmten Betriebssituationen für einen jeweiligen Drehwinkel nicht nur einen Empfangslichtpuls, sondern auch zwei oder mehr Empfangslichtpulse oder Echos empfangen kann. Beispielsweise kann ein erster Empfangslichtpuls von einem nicht sicherheitskritischen Partikel, beispielsweise einem Regentropfen oder einem Staubpartikel remittiert werden, während ein zweiter Empfangslichtpuls durch eine Remission des ausgesendeten Lichtpulses an einem im Schutzfeld vorhandenen sicherheitskritisches Objekt oder auch an einer Begrenzung des Schutzfeldes erzeugt werden kann.

Es wird also für eine geeignete Zeitdauer ein zeitlicher Verlauf des von dem Lichtempfänger für einen jeweiligen Drehwinkel empfangenen Empfangssignals aufgezeichnet und insbesondere zumindest temporär gespeichert, um eine Auswertung des Erfassungssignals zu ermöglichen. Typischerweise ist eine Trennung von zwei Empfangslichtpulsen möglich, wenn die zugeordneten reflektierenden oder remittierenden Objekte mehr als ca. 1 bis 3 m voneinander beabstandet sind, wobei die exakte Auflösungsgrenze u.a. von der Güte der verwendeten Signalverarbeitungskomponenten (z.B. der Abtastrate) abhängt. Da sich die Ablenkeinheit zwischen dem Erfassen eines ersten und eines zweiten Empfangslichtpulses für einen jeweiligen nominellen Drehwinkel in der Regel weiterdreht, können sich die tatsächlichen Drehwinkel für die beiden Empfangslichtpulse entsprechend des Laufzeitunterschiedes sehr geringfügig voneinander unterscheiden. Da dieser Zeitunterschied jedoch in der Größenordnung von einigen Nanosekunden liegt, ist die Drehwinkeländerung zwischen den Empfangsereignissen für einen jeweiligen nominellen Drehwinkel zu vernachlässigen.

Mit den genannten Prüfbedingungen werden verschiedene Kriterien überprüft. Beim Überprüfen der ersten Prüfbedingung wird geprüft, ob die Anzahl von Empfangslichtpulsen in einem jeweiligen Empfangssignal gleich 1 ist. Wenn dies zutrifft, ist der Wahrheitswert der ersten Prüfbedingung WAHR. Sofern zwei oder mehrere Empfangslichtpulse festgestellt wurden, ist der Wahrheitswert dieser Aussage FALSCH. Theoretisch würde der Wahrheitswert auch FALSCH sein, wenn keine Empfangslichtpulse für einen bestimmten Drehwinkel erfasst wurden. In dem Fall wird jedoch davon ausgegangen, dass kein Objekt im Schutzfeld oder innerhalb der Reichweite des Überwachungssensors vorhanden ist und daher auch keine Auswertung eines Empfangssignals zur Bestimmung eines Objektabstandes möglich ist bzw. kein Erfassungssignal im engeren Sinne vorliegt. Das erfindungsgemäße Verfahren setzt insofern ein, wenn durch die Präsenz zumindest eines reflektierten oder remittierten Empfangslichtpulses klar ist, dass ein Objekt im Schutzfeld ist, und dient der Abstandbestimmung eines solchen Objektes.

Solange kein Empfangslichtpuls empfangen wird, kann davon ausgegangen werden, dass sich in dem überwachten Schutzfeld kein Objekt befindet, dessen Abstand bestimmt werden soll.

Mit der zweiten Prüfbedingung wird geprüft, ob für zumindest einen benachbarten Drehwinkel ein Vergleichsobjekt erfasst wurde, dessen zugeordneter Empfangslichtpuls im Wesentlichen die gleiche Laufzeit aufweist wie der erste Empfangslichtpuls. Mit dieser Prüfung wird ermittelt, ob ein auch als Kantentreffer bezeichnetes Szenario vorliegt. So ist es denkbar, dass ein Lichtpuls, der einen gewissen Querschnitt aufweist, ein Objekt im Kantenbereich streift. In dem Fall wird ein Teil des ausgesendeten Lichtpulses von dem an seiner Kante getroffenen Objekt remittiert und als erster Empfangslichtpuls registriert. Der nicht remittierte Teil des Lichtpulses kann gegebenenfalls noch von einem weiteren Objekt remittiert werden und als zweiter Empfangslichtpuls registriert werden. In dem Fall muss verhindert werden, dass der Abstand auf der Grundlage der für den zweiten Empfangslichtpuls ermittelten Laufzeit erfolgt, denn es kann nicht ausgeschlossen werden, dass es sich bei dem streifend oder an seiner Kante getroffenen Objekt um ein sicherheitskritisches Objekt und nicht um einen unkritischen Partikel handelt.

Bei der Überprüfung der dritten Prüfbedingung, wonach geprüft wird, ob ein Reflektor erfasst wurde, wird ermittelt, ob ein weiteres potentiell sicherheitskritisches Szenario vorliegt. So ist es denkbar, dass der ausgesendete Lichtpuls zunächst auf ein möglicherweise sicherheitskritisches Objekt trifft, welches einen Großteil der Intensität des Lichtpulses als ersten Empfangslichtpuls remittiert, wobei jedoch ein geringer Teil des ausgesendeten Lichtpulses beispielsweise in Form von Streulicht dieses Objekt passieren kann. Typischerweise beträgt die Intensität des Streulichts nur etwa 0,1 - 1% der Intensität im Spot einen Laserstrahls. Wenn dieses passierende Streulicht auf einen Reflektor, insbesondere auf einen Retroreflektor trifft, kann es als ein zweiter Empfangslichtpuls registriert werden, der in Abhängigkeit von den geometrischen Bedingungen und den jeweiligen Oberflächeneigenschaften der erfassten Objekte eine durchaus vergleichbare oder sogar höhere Intensität wie der erste Empfangslichtpuls aufweisen kann. Insbesondere Retroreflektoren sind hier als kritisch anzusehen, da diese annähernd die gesamte Lichtintensität gerichtet reflektieren. Der Remissionsgrad eines Retroreflektors kann um einen Faktor von bis zu 10.000 oder 100.000 höher sein als der Remissionsgrad eines schwarzen Objekts. So ist es beispielsweise denkbar, dass zwar ein großer Anteil des ausgesendeten Lichtpulses auf ein potentiell sicherheitskritisches Objekt trifft, wobei der hierdurch erzeugte erste Empfangslichtpuls dennoch eine verhältnismäßig geringe Intensität aufweisen kann, wenn dieses Objekt aufgrund eines niedrigen Remissionsgrads nur einen geringen Anteil dieser Intensität remittiert und daher der erste und der zweite Empfangslichtpuls vergleichbare Intensitäten aufweisen. Ein solcher Reflektor, insbesondere Retroreflektor, kann sich zufällig im Strahlengang befinden oder zum Beispiel aus Gründen der zur Überwachung vorgesehenen Messanordnung bewusst vorgesehen sein.

Nur wenn für alle drei der genannten Prüfbedingungen der jeweilige Wahrheitswert FALSCH ist, wird der Abstand auf der Grundlage der für den zweiten Empfangslichtpuls ermittelten Laufzeit bestimmt. Der erste Empfangslichtpuls wird dann in der Regel verworfen, d.h. nicht zu einer Abstandsermittlung herangezogen, da dann mit einer sehr hohen Wahrscheinlichkeit angenommen werden kann, dass der erste Empfangslichtpuls auf ein okkludierendes Objekt, d.h. auf einen unkritischen Partikel wie Staub, Regentropfen oder Schneeflocken zurückzuführen ist. Sobald mindestens eine der genannten Prüfbedingungen den Wahrheitswert WAHR aufweist, besteht grundsätzlich die Möglichkeit, dass der erste Empfangslichtpuls auch von einem potentiell sicherheitskritischen Objekt stammen kann. In dem Fall ist es nicht zulässig, den Abstand auf der Grundlage der Laufzeit des zweiten Empfangslichtpulses zu ermitteln, da andernfalls im schlimmsten Fall ein falsch-negatives Objekterfassungssignal erzeugt werden könnte, d.h. ein zumindest potentiell sicherheitskritisches Objekt im Schutzfeld irrtümlicherweise nicht als solches erkannt würde.

Bei der Überprüfung der zweiten und dritten Prüfbedingung, ob ein Kantentreffer vorliegt bzw. ein (Retro-)Reflektor getroffen wurde, wird auf einen Vergleich des bei dem aktuellen Drehwinkel auszuwertenden Empfangssignals mit einem oder mehreren benachbarten Drehwinkeln abgestellt. Bei den benachbarten Drehwinkeln kann es sich um solche Drehwinkel handeln, die zeitlich vor oder auch zeitlich nach dem aktuellen zu betrachtenden Drehwinkel abgetastet bzw. ausgewertet werden. Diese vergleichende Auswertung benachbarter Drehwinkel muss auch nicht auf die unmittelbar benachbarten Drehwinkel beschränkt sein, sondern kann auch mehrere, beispielsweise die zwei, drei oder vier nächstliegenden Drehwinkel umfassen. Unter benachbarten Drehwinkeln werden insbesondere aufeinanderfolgende Drehwinkel in der eingangs genannten Folge von Drehwinkeln verstanden, d.h. in der Regel diejenigen Drehwinkel, die sich um nicht mehr als eine bestimmte Drehwinkeldifferenz von dem aktuellen Drehwinkel unterscheiden. Sofern ein Vergleich mit zeitlich nachfolgend ermittelten Drehwinkeln erfolgen soll, so kann gegebenenfalls die Durchführung der Prüfschritte für den aktuellen Drehwinkel so lange ausgesetzt werden, bis die entsprechenden Ergebnisse für die benachbarten Drehwinkel vorliegen.

Bei der Überprüfung auf Vorliegen eines Kantentreffers wird davon ausgegangen, dass ein bei dem aktuellen Drehwinkel nur streifend getroffenes Objekt in einem benachbarten Drehwinkel zumindest im Wesentlichen vollständig von dem ausgesendeten Lichtpuls getroffen wird. Somit ist in dem Erfassungssignal dieses benachbarten Drehwinkels in der Regel ein Empfangslichtpuls vorhanden, dessen Abstand im Wesentlichen, d.h. im Rahmen der Messgenauigkeit des Überwachungssensors, gleich dem Abstand ist, der für den fraglichen ersten Empfangslichtpuls des Erfassungssignals für den aktuellen Drehwinkel ermittelt wurde.

In entsprechender Weise kann bei der Überprüfung der dritten Prüfbedingung vorgegangen werden. Auch hier werden wieder ein oder mehrere benachbarte Drehwinkel betrachtet. Falls bei einem benachbarten Drehwinkel ein Reflektor getroffen wurde, für den der gleiche Abstand wie für den fraglichen zweiten Empfangslichtpuls des aktuellen Drehwinkels ermittelt wurde, wird angenommen, dass der zweite Empfangslichtpuls des aktuellen Drehwinkels ebenfalls auf eine Reflexion an dem Reflektor zurückzuführen ist. In dem Fall muss sichergestellt werden, dass hier der Abstand auf der Grundlage der Laufzeit des ersten Empfangslichtpulses ermittelt wird, da dieser von einem zumindest potentiell sicherheitskritischen Objekt stammen kann. Für die Erkennung von Reflektoren in den benachbarten Drehwinkeln kann beispielsweise auf eine Auswertung der Intensitäten in den entsprechenden Erfassungssignalen zurückgegriffen werden, was nachfolgend noch näher erläutert wird.

Mit dem erfindungsgemäßen Verfahren kann somit die Gefahr, dass aufgrund der Anwesenheit von sicherheitsunkritischen, okkludierenden Objekten wie Staubpartikeln, Spänen, Regentropfen oder Schneeflocken ein falsch-positives Objekterfassungssignal erzeugt wird, wesentlich vermindert werden, ohne dass hierdurch die Sicherheit bei der Überwachung einer potentiell gefährlichen Maschine oder eines Fahrzeugs beeinträchtigt wird. Bevor ein Erfassungssignal bzw. Empfangslichtpuls, von dem angenommen werden kann, dass es von einem sicherheitsunkritischen Objekt stammt, verworfen wird, müssen mehrere Szenarien ausgeschlossen werden können, bei denen die Anwesenheit von zwei oder mehr Empfangslichtpulsen in einem Erfassungssignal für einen jeweiligen Drehwinkel auch auf potentiell sicherheitskritische Situationen zurückzuführen sein könnte.

Als "okkludierend" werden hier solche Objekte oder Partikel bezeichnet, die zwar für einen weiteren Empfangslichtpuls im jeweiligen Empfangslichtsignal verantwortlich sind, an sich aber sicherheitsunkritisch sind, wobei von dieser Bezeichnung auch Ansammlungen derartiger Objekte (also z.B. Staubwolken) mit umfasst sein sollen.

Das Verfahren kann neben den genannten Schritten auch weitere Schritte umfassen, die vor, zwischen und/oder während den erfindungsgemäßen Schritten durchgeführt werden. Insbesondere kann eine weitergehende Auswertung der Erfassungs- und/oder Detektionssignale erfolgen, bei denen ein oder mehrere zusätzliche Prüfbedingungen überprüft werden. Diese Prüfbedingungen können beispielsweise eine Auswertung der Intensität oder Signalhöhe der Empfangslichtpulse umfassen. Weiterhin können auch Bedingungen überprüft werden, auf deren Grundlage entschieden wird, ob ein Objekterfassungs- und/oder Alarmsignal auszugeben ist.

Grundsätzlich können einzelne Prüfbedingungen, insbesondere die erste Prüfbedingung, auch mehrfach geprüft werden. Dies wird nachfolgend bei der Beschreibung eines Ausführungsbeispiels noch näher erläutert.

Die Prüfschritte können insbesondere als Unterschritte des Schritts c) angesehen und werden bevorzugt nacheinander in der genannten Reihenfolge durchgeführt, wobei insbesondere die Prüffolge der zweiten und dritten Prüfbedingung auch vertauscht werden kann.

Das erfindungsgemäße Verfahren soll dabei auch Verfahrensführungen umfassen, bei denen Prüfbedingungen abgeprüft werden, die den beschriebenen Prüfbedingungen im Grundsatz gleich sind, nur in anderer Weise formuliert sind. Derartig grundsätzlich gleiche Prüfbedingungen sind beispielsweise logisch komplementär formulierte Prüfbedingungen, d.h. z.B. durch Negierung umformulierte zu prüfende Aussagen, einschließlich dementsprechend angepasster (z.B. vertauschter) Wahrheitswerte, bei deren Anwendung auf ein bestimmtes Erfassungssignal dasselbe Ergebnis erhalten wird wie bei Anwendung der explizit beschriebenen Prüfbedingungen auf dieses Erfassungssignal.

Gemäß einer vorteilhaften Ausgestaltung des Verfahrens werden weitere der drei Prüfbedingungen nicht mehr geprüft, wenn der Wahrheitswert einer zuvor geprüften Prüfbedingung WAHR ist. Sobald also eine der Prüfbedingungen den Wahrheitswert WAHR aufweist, kann die Durchführung zumindest der genannten drei Prüfschritte beendet werden. Nur wenn die erste Prüfbedingung FALSCH ist, wird die zweite (bzw. dritte) Prüfbedingung geprüft. Nur wenn auch diese Prüfbedingung FALSCH ist, wird die noch nicht geprüfte dritte (bzw. zweite) Prüfbedingung geprüft.

Alternativ kann vorgesehen sein, dass zunächst der erste, zweite und dritte Prüfschritt durchgeführt wird und in einem nachfolgenden Auswerteschritt die Wahrheitswerte der zugeordneten Prüfbedingungen ausgewertet werden, wobei auf der Grundlage der genannten Bedingungen für die Wahrheitswerte ermittelt wird, ob der Abstand auf der Grundlage der Laufzeit des ersten oder des zweiten Empfangslichtpulses zu bestimmen ist. Mit anderen Worten werden bei einer solchen Ausgestaltung des erfindungsgemäßen Verfahrens stets alle drei genannten Prüfbedingungen geprüft und erst im Anschluss die jeweiligen Wahrheitswerte ausgewertet, um zu entscheiden, ob der Abstand auf der Grundlage der Laufzeit des ersten oder des zweiten Empfangslichtpulses ermittelt werden muss. Bei dieser Variante kann beispielsweise für jede Prüfbedingung ein Flag gesetzt werden, welches den Wahrheitswert für jede der drei Prüfbedingungen repräsentiert. Diese Flags können beispielsweise zusammen mit dem Erfassungs- bzw. Empfangssignal zwischengespeichert werden. Nur wenn alle drei Flags den Wahrheitswert FALSCH repräsentieren, erfolgt das Bestimmen des Abstandes auf der Grundlage der für den zweiten Empfangslichtpuls ermittelten Laufzeit. Wenn ein oder mehrere der Flags einen Wahrheitswert WAHR aufweisen, erfolgt stets die Abstandsbestimmung auf der Grundlage der für den ersten Empfangslichtpuls ermittelten Laufzeit.

Gemäß einer vorteilhaften Ausgestaltung kann Schritt a) ein Quantisieren des Erfassungssignals umfassen. Das Erfassungssignal wird demnach mit einer bestimmten Frequenz abgetastet und dann gegebenenfalls digitalisiert. Für diesen Schritt kann beispielsweise ein sogenanntes FPGA (für Englisch: Field Programmable Gate Array) verwendet werden.

Vorteilhafterweise kann in einem auf Schritt c) folgenden Schritt d) ein Alarmsignal oder ein Abschaltsignal ausgegeben werden, wenn zumindest ein jeweiliges Detektionssignal zumindest eine vorgegebene Alarmbedingung erfüllt. Dieses Alarmsignal oder Abschaltsignal kann auch als Objekterfassungssignal angesehen werden. Die genannte zumindest eine vorgegebene Alarmbedingung kann beispielsweise eine zusätzliche Bedingung sein, welche es ermöglicht, sicherheitskritische Objekte zu identifizieren. Beispielsweise kann ermittelt werden, ob ein Objekt mit einer bestimmten (Mindest-)Größe - durch Auswertung mehrerer benachbarter Drehwinkel bestimmbar -, in einem bestimmten Abstand und/oder einem bestimmten Drehwinkel detektiert wurde.

Gemäß einer weiteren vorteilhaften Ausgestaltung umfasst in Schritt b) das Ermitteln der Anzahl von Empfangslichtpulsen, das für ein oder mehrere im Empfangssignal vorhandene lokale Maxima ermittelt wird, ob ein oder mehrere, für eine Identifizierung als Empfangslichtpuls notwendige Kriterien erfüllt sind, wobei die Kriterien aus einer Gruppe ausgewählt sind, welche eine vorgegebene Höhe, Breite und/oder Pulsform umfassen. Bevor die Anzahl der Empfangslichtpulse ermittelt wird, kann vorgängig auch eine Signalverarbeitung des Empfangssignals erfolgen, welche beispielsweise eine Demodulation und/oder eine Filterung umfassen kann.

Vorteilhafterweise umfasst das Überprüfen der dritten Prüfbedingung (ob für einen benachbarten Drehwinkel ein Reflektor erfasst wurde), dass die Intensität eines für den zumindest einen benachbarten Drehwinkel zugeordneten Empfangslichtpulses ausgewertet wird, bevorzugt dass sie mit einem fest oder dynamisch vorgegebenen Intensitätsschwellenwert verglichen wird. Diese Ausgestaltung beruht auf der Erkenntnis, dass Reflektoren, insbesondere Retroreflektoren eine wesentlich höhere Reflektivität oder Remissivität aufweisen als üblicherweise zu erwartende Objekte, welche in der Regel einen Teil der auftreffenden Lichtintensität absorbieren oder diffus streuen, so dass dieser den Lichtempfänger nicht mehr erreichen kann. Das Verhältnis dieser Intensitäten kann durchaus bis zu 1:10.000 betragen. Ein fester Intensitätsschwellenwert kann beispielsweise in einem vorgängigen Einlernvorgang oder durch eine geeignete Parametrierung vorgegeben werden. Eine dynamische Vorgabe des Intensitätsschwellenwerts kann beispielsweise durch einen Vergleich mit einer Mehrzahl von anderen Empfangslichtpulsen erfolgen, von denen angenommen werden kann, dass diese nicht von einem Reflektor stammen.

Gemäß einer weiteren vorteilhaften Ausgestaltung der Erfindung ist der Überwachungssensor ein Laserscanner, welcher zur Überwachung von einer oder mehreren Abtastflächen ausgelegt ist. Das Schutzfeld erstreckt sich innerhalb einer Abtastfläche und kann beispielsweise sektorförmig (bei einem Abtastwinkel von weniger als 360°) oder kreisförmig (Abtastwinkel gleich 360°) sein. Mit einem Laserscanner, welcher mehrere Abtastflächen aufweist, kann ein dreidimensionales Schutzfeld abgetastet werden. Die Abtastflächen können sich in mehreren parallelen, voneinander beabstandeten Ebenen erstrecken oder als konische Abtastflächen mit insbesondere unterschiedlichen Konuswinkeln ausgestaltet sein.

Die vorliegende Erfindung betrifft ferner einen abstandsmessenden Überwachungssensor mit den Merkmalen des unabhängigen Vorrichtungsanspruchs. Ein erfindungsgemäßer Abstandsüberwachungssensor zur Erfassung und Positionsbestimmung von Objekten in einem zumindest zweidimensionalen Schutzfeld umfasst zumindest einen Lichtsender, zumindest einen Lichtempfänger, eine Ablenkeinheit und eine Steuereinheit, wobei die Steuereinheit zum Durchführen des Verfahrens gemäß zumindest einer der vorhergehenden erfindungsgemäßen oder vorteilhaften Ausgestaltungen ausgelegt ist. Da die Steuereinheit neben einer Ansteuerung der Komponenten des Überwachungssensors auch verschiedene Auswerteschritte durchführen kann, kann diese auch als Steuer- und Auswerteeinheit bezeichnet werden. Die Steuereinheit ist somit insbesondere auch zum Erfassen des Erfassungssignals, zum Ermitteln der Anzahl von Empfangslichtpulsen in einem jeweiligen Empfangslichtsignal, zum Erzeugen eines Detektionssignals, zum Prüfen zumindest der drei genannten Prüfbedingungen und zum Bestimmen des Abstandes auf der Grundlage der für einen jeweiligen Empfangslichtpuls ermittelten Laufzeit eingerichtet. Grundsätzlich ist die Steuereinheit derart eingerichtet, dass diese alle drei Prüfbedingungen prüfen kann, auch wenn gegebenenfalls ein oder mehrere der genannten Prüfbedingungen nur deshalb nicht mehr geprüft werden brauchen, weil eine bereits zuvor geprüfte Prüfbedingung eine Entscheidung darüber erlaubt, ob das Bestimmen des Abstandes auf der Grundlage der Laufzeit des ersten oder des zweiten Empfangslichtpulses erfolgen soll.

Weitere vorteilhafte Ausgestaltungen der Erfindung ergeben sich aus den Unteransprüchen, der Beschreibung und den Zeichnungen, wobei in Bezug auf das erfindungsgemäße Verfahren beschriebene vorteilhafte Ausgestaltungen sich auch auf den erfindungsgemäßen Überwachungssensor beziehen und umgekehrt. Vorteilhafte Ausgestaltungen können insbesondere auch durch hier nicht explizit erwähnte Kombinationen zu weiteren vorteilhaften Ausgestaltungen kombiniert werden.

Die Erfindung wird nachfolgend anhand eines Ausführungsbeispiels mit Bezug auf die Zeichnungen beschrieben. Es zeigen:
- Fig. 1: ein Diagramm eines von einem abstandsmessenden Überwachungssensor erfassten Erfassungssignals;
- Fig. 2: eine schematische Darstellung eines Erfassungsszenarios, bei welchem ein Kantentreffer vorliegt;
- Fig. 3: eine schematische Darstellung eines weiteren Erfassungsszenarios, bei dem zusätzlich zu einem Objekt ein Reflektor erfasst wurde;
- Fig. 4: eine schematische Darstellung von fünf verschiedenen Erfassungsszenarien; und
- Fig. 5: ein Flussdiagramm des Verfahrens gemäß einem Ausführungsbeispiel der Erfindung.

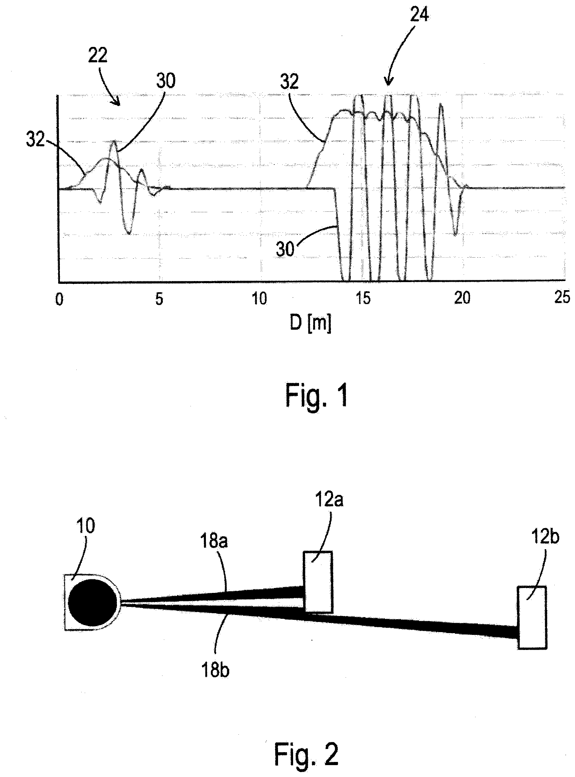

Fig. 1 zeigt ein Diagramm eines Erfassungssignals, welches einen zeitlichen Verlauf eines von einem Lichtempfänger eines abstandsmessenden Überwachungssensors für einen jeweiligen Drehwinkel empfangenen Empfangssignals repräsentiert. Die Laufzeit wurde in einen Abstand D umgerechnet, welcher auf der x-Achse des Diagramms aufgetragen ist. Die y-Achse des Diagramms repräsentiert die Intensität in arbiträren Einheiten.

Das Diagramm von Fig. 1 umfasst zum einen ein Roherfassungssignal 30, wie es beispielsweise nach Abtastung des Empfangssignals vorliegt. Die andere Kurve repräsentiert ein Erfassungssignal 32, welches durch Demodulation des Roherfassungssignals 30 erzeugt wurde. Das Roherfassungssignal 30 bzw. das Erfassungssignal 32 weist zwei verschiedene Empfangslichtpulse 22, 24 auf, wobei der zeitlich zuerst (d.h. bei einem geringeren Abstand) erfasste, kleinere Empfangslichtpuls einen ersten Empfangslichtpuls 22 und der zeitlich nachfolgend (d.h. bei einem größeren Abstand) erfasste, größere Empfangslichtpuls einen zweiten Empfangslichtpuls 24 darstellen.

Das in Fig. 1 dargestellte Erfassungssignal 30, 32 repräsentiert insbesondere ein Szenario, bei dem ein von einem Lichtsender eines Überwachungssensors ausgesendeter Lichtpuls zunächst auf ein okkludierendes Objekt, beispielsweise eine Staubwolke oder einen Nebelschleier trifft, welcher einen Teil des ausgesendeten Lichtpulses in Richtung des Überwachungssensors remittiert. Dieser remittierte Lichtanteil entspricht dem ersten Empfangslichtpuls 22. Der übrige Teil des ausgesendeten Lichts trifft in einem größeren Abstand auf ein größeres Objekt, beispielsweise ein sicherheitskritisches Objekt, etwa ein Körperteil eines Bedieners einer durch den Überwachungssensor überwachten Maschine. Dieser Teil des remittierten Lichtpulses entspricht dem zweiten Empfangslichtpuls 24.

Gemäß dem erfindungsgemäßen Verfahren wird nun gemäß einer ersten Prüfbedingung überprüft, ob die Anzahl der in dem Erfassungssignal vorhandenen Empfangslichtpulse gleich 1 ist. Wenn diese Bedingung WAHR ist, wird die Position eines Objekts, welches den betreffenden Empfangslichtpuls remittiert hat, auf der Grundlage des aktuellen Drehwinkels der Ablenkeinheit und der Laufzeit des betreffenden Empfangslichtpulses ermittelt. Eine weitere Prüfung von zusätzlichen Prüfbedingungen erübrigt sich, da ja nur ein Objekt erfasst wurde. Falls jedoch das Erfassungssignal zwei (oder mehr) Empfangslichtpulse aufweist, wie es in Fig. 1 dargestellt ist, ist der Wahrheitswert der ersten Prüfbedingung FALSCH.

Bevor entschieden werden kann, ob der Abstand für den aktuellen Drehwinkel auf der Grundlage des ersten Empfangslichtpulses 22 oder des zweiten Empfangslichtpulses 24 ermittelt wird, müssen ein oder mehrere weitere Prüfbedingungen abgeprüft werden, die verschiedene Szenarien repräsentieren.

Ein erstes beispielhaftes Szenario ist schematisch in Fig. 2 dargestellt. Dort sind zwei ausgesendete Lichtpulse 18a, 18b dargestellt, welche von einem Lichtsender eines abstandsmessenden Überwachungssensors 10 ausgesendet wurden. Während der Lichtpuls 18a ausschließlich ein näher an dem Überwachungssensor 10 liegendes Objekt 12a trifft, trifft der benachbarte Lichtpuls 18b sowohl auf das Objekt 12a als auch auf ein dahinter liegendes, weiter vom Überwachungssensor 10 entferntes Objekt 12b. Ein dem Lichtpuls 18b zugeordnetes Erfassungssignal könnte ungefähr dem Erfassungssignal von Fig. 1 entsprechen. Demnach wäre aus dem Erfassungssignal selbst nicht ersichtlich, ob der erste Empfangslichtpuls 22 von einem unkritischen okkludierenden Objekt stammt oder von einem möglicherweise sicherheitskritischen Objekt 12a gemäß Fig. 2, welches im Bereich einer Kante von einem Teil des Lichtpulses 18b getroffen wurde.

Um hier eine Differenzierung vornehmen zu können, wird gemäß einer zweiten Prüfbedingung überprüft, ob für zumindest einen benachbarten Drehwinkel ein Vergleichsobjekt erfasst wurde, dessen zugeordneter Empfangslichtpuls im Wesentlichen die gleiche Laufzeit aufweist wie der erste Empfangslichtpuls. Im Beispiel von Fig. 2 würde dementsprechend die Laufzeit für den vollständig am Objekt 12a remittierten Lichtpuls 18a ausgewertet. Da beide Lichtpulse 18a, 18b auf dasselbe Objekt 12a treffen, ergibt diese Prüfung in dem dargestellten Fall einen Wahrheitswert WAHR für die auf den Lichtpuls 18b angewandte zweite Prüfbedingung. Demnach muss das Bestimmen des Abstandes für den aktuellen Drehwinkel (entsprechend dem Lichtpuls 18b) auf der Grundlage der für den ersten Empfangslichtpuls ermittelten Laufzeit erfolgen. Es wird somit ausgeschlossen, dass das Objekt 12a fälschlicherweise als ein sicherheitsunkritisches okkludierendes Objekt behandelt wird und bei der Abstandsermittlung nicht berücksichtigt wird.

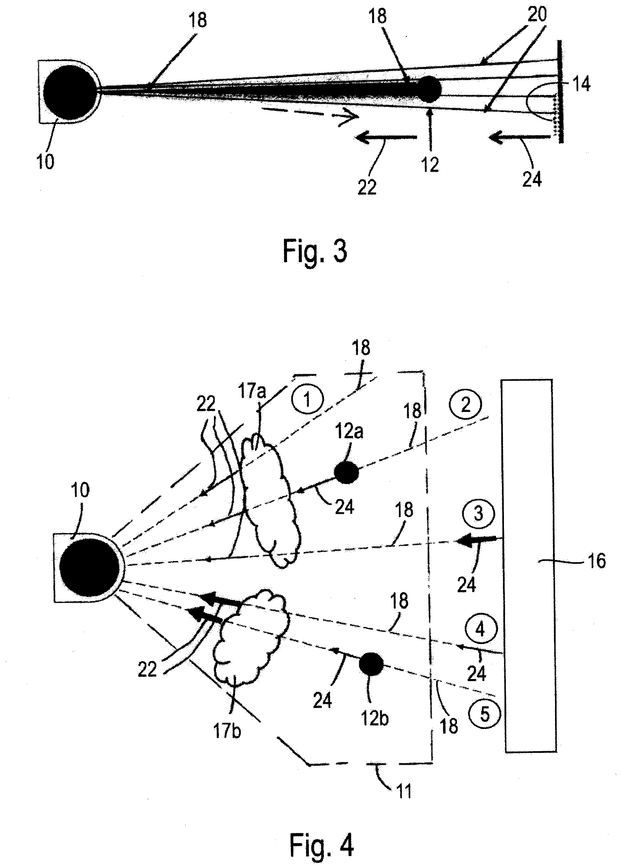

Für den Fall, dass kein solcher Kantentreffer detektiert wurde, muss noch ein zweites beispielhaftes Szenario abgeprüft werden, welches in der schematischen Darstellung von Fig. 3 repräsentiert ist. Fig. 3 zeigt in unmaßstäblicher Weise einen Lichtpuls 18, welcher in seinem Kern eine hohe Intensität aufweist und von einen kegelförmigen Mantel von Streulicht 20 umgeben ist, welches eine wesentlich geringere Intensität aufweist. Bei dem Szenario von Fig. 3 trifft der Lichtpuls 18 nahezu vollständig auf ein Objekt 12 und wird dort als erster Empfangslichtpuls 22 in Richtung des Überwachungssensors 10 remittiert. Das Streulicht 20 kann jedoch das Objekt 12 passieren und trifft teilweise auf einen Reflektor 14, insbesondere einen Retroreflektor, welcher sich vom Überwachungssensor 10 aus betrachtet, hinter dem Objekt 12 befindet. Das reflektierte Streulicht erzeugt einen zweiten Empfangslichtpuls 24. Auch in diesem Szenario ähnelt das Erfassungssignal dem in Fig. 1 dargestellten Erfassungssignal, wobei gegebenenfalls die Intensitätsverhältnisse der beiden Empfangslichtpulse 22, 24 abweichen können.

Gemäß einer dritten Prüfbedingung muss demnach überprüft werden, ob für zumindest einen benachbarten Drehwinkel ein Reflektor erfasst wurde, dessen zugeordneter Empfangslichtpuls im Wesentlichen die gleiche Laufzeit aufweist wie der zweite Empfangslichtpuls 24. Bei dem in Fig. 3 dargestellten Szenario wird für einen entsprechenden benachbarten Drehwinkel, welcher durch einen gestrichelten Pfeil repräsentiert ist, ein entsprechender Lichtpuls im Wesentlichen vollständig auf den Reflektor treffen. Der entsprechende Empfangslichtpuls weist die gleiche Laufzeit und dementsprechend auch den gleichen zugeordneten Abstand wie der zweite Empfangslichtpuls 24 auf. Da dieser Empfangslichtpuls aufgrund der Reflexion an einem (Retro-)Reflektor eine sehr hohe Intensität besitzt, kann durch Vergleichen der Intensität mit einem Referenzwert zusätzlich festgestellt werden, dass dieser Empfangslichtpuls von einem (Retro-)Reflektor stammen muss. Infolgedessen muss dann auch der betrachtete zweite Empfangslichtpuls 24 von dem (Retro-)Reflektor stammen. Demnach kann der dritten Prüfbedingung für das hier dargestellte Szenario der Wahrheitswert WAHR zugewiesen werden. Aufgrund dessen muss auch hier die Abstandsermittlung auf der Grundlage der für den ersten Empfangslichtpuls ermittelten Laufzeit erfolgen, d.h. der ermittelte Abstand für den aktuell betrachteten Drehwinkel entspricht dem Abstand des Objekts 12 von dem Überwachungssensor 10.

In Fig. 4 sind nochmals beispielhaft insgesamt fünf verschiedene Erfassungsszenarien zusammengefasst dargestellt, welche mit Ziffern von 1 bis 5 bezeichnet sind.

Ein von einem Überwachungssensor 10 überwachtes Schutzfeld 11 ist mit einer gestrichelten Umgrenzungslinie dargestellt. Hinter dem Schutzfeld 11 befindet sich ein Hintergrundobjekt 16. Dieses Hintergrundobjekt 16 kann beispielsweise ein stationäres Bauteil einer zu überwachenden Maschine oder eine Wand darstellen. Innerhalb des Schutzfeldes 11 befinden sich zum einen als Wolken dargestellte okkludierende Objekte 17a, 17b beispielsweise Staubwolken, welche sicherheitsunkritische Objekte oder Partikel umfassen. Vom Überwachungssensor 10 aus gesehen hinter den okkludierenden Objekten 17a, 17b befinden sich zwei sicherheitskritische Objekte 12a, 12b. Die von den Objekten 12a, 12b, 16, 17a, 17b erzeugten Empfangslichtpulse 22, 24 sind durch jeweilige Pfeile repräsentiert, wobei die Intensität der Empfangslichtpulse 22, 24 durch die Strichbreite der Pfeile repräsentiert wird (je stärker ein Pfeil, desto höher die Intensität).

Im Szenario 1 trifft ein ausgesendeter Lichtpuls 18 lediglich auf das okkludierende Objekt 17a, so dass das entsprechend erzeugte Erfassungssignal nur einen einzigen Empfangslichtpuls 22 aufweist. Da sich dieser Ort innerhalb des Schutzfeldes 11 befindet, wird als Alarmsignal eine Schutzfeldverletzung ausgegeben.

Im Szenario 2 trifft der ausgesendete Lichtpulses 18 zunächst auf das okkludierende Objekt 17a, welches einen Teil des Lichtpulses 18 als erster Empfangslichtpuls 22 remittiert und einen anderen Teil des Lichtpulses 18 passieren lässt, welcher von dem Objekt 12a als zweiter Empfangslichtpuls 24 remittiert wird. Da weder eine Objektkante noch ein Reflektor getroffen wurde und sich das Objekt 12a innerhalb des Schutzfeldes 11 befindet, wird für den zweiten Empfangslichtpuls 24 eine Schutzfeldverletzung detektiert.

Bei dem Szenario 3 wird durch das okkludierende Objekt 17a ein relativ schwacher erster Empfangslichtpuls 22 und durch das Hintergrundobjekt 16 ein relativ starker zweiter Empfangslichtpuls 24 ermittelt. Da sich das Hintergrundobjekt 16 jedoch außerhalb des Schutzfeldes 11 befindet, wird keine Schutzfeldverletzung ermittelt.

Im Szenario 4 erzeugt das okkludierende Objekt 17b einen relativ starken ersten Empfangslichtpuls 22 und das Hintergrundobjekt 16 einen relativ schwachen zweiten Empfangslichtpuls 24. Obwohl das okkludierende Objekt 17b eine vergleichsweise höhere Dichte und damit eine geringere Transparenz als das andere okkludierende Objekt 17a aufweist, wird auch hier diese Transparenz erkannt und eine Abstandsermittlung erfolgt auf der Grundlage des zweiten Empfangslichtpulses. Da dieser wiederum vom Hintergrundobjekt 16 stammt und damit außerhalb des Schutzfeldes liegt, wird das Schutzfeld als frei ermittelt.

Im Szenario 5 schließlich erfasst der Überwachungssensor 10 einen relativ starken, von dem okkludierenden Objekt 17b erzeugten ersten Empfangslichtpuls 22 und einen sehr schwachen, von dem Objekt 12b erzeugten zweiten Empfangslichtpuls 24. Da die Intensität des zweiten Empfangslichtpulses 24 absolut oder relativ in Bezug auf den ersten Empfangslichtpuls 22 zu gering ist, erfolgt hier eine Abstandsermittlung auf der Grundlage des ersten Empfangslichtpulses 22. Dies führt dazu, dass eine Schutzfeldverletzung durch das okkludierende Objekt 17b festgestellt wird. Dieses Szenario trägt der Tatsache Rechnung, dass die Transparenz des okkludierenden Objekts 17b so gering ist, dass dieses keine ausreichende Intensität mehr durchlässt, um eine sichere Detektion eines ggf. dahinterliegenden Objekts 12b zu gewährleisten.

Somit stellen die Berücksichtigung der absoluten oder relativen Intensitäten der Empfangslichtpulse 22, 24 und der Vergleich der für ein jeweiliges Objekt ermittelten Abstände vom Überwachungssensor 10 mit vorgegebenen Begrenzungen des Schutzfeldes 11 weitere jeweilige Prüfbedingungen dar, die im Rahmen des erfindungsgemäßen Verfahrens zusätzlich geprüft werden können.

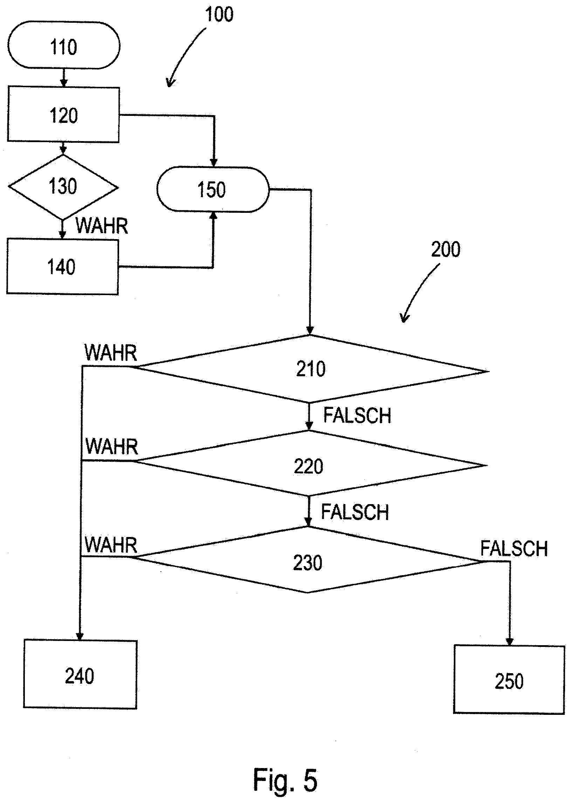

Mit Bezug nun auf Fig. 5 wird ein beispielhafter Ablauf des erfindungsgemäßen Verfahrens anhand eines Flussdiagramms näher erläutert.

Das Verfahren umfasst zwei Verfahrensabschnitte 100, 200, welche nacheinander durchgeführt werden. Dabei setzt das beschriebene Verfahren ein, wenn im Empfangssignal bei einem bestimmten Drehwinkel zumindest ein Empfangslichtpuls vorhanden ist und insofern von einem Objekt im Schutzfeld ausgegangen werden kann, dessen Abstand zu bestimmen ist.

In einem Schritt 110 des Verfahrensabschnitts 100 wird ein Erfassungssignal, welches einen jeweiligen zeitlichen Verlauf eines von dem Lichtempfänger für einen jeweiligen Drehwinkel empfangenen Empfangssignals repräsentiert, in abgetasteter Form bereitgestellt.

In einem nächsten Schritt 120 wird die Laufzeit oder der korrespondierende Abstand für einen ersten Empfangslichtpuls des Erfassungssignals ermittelt und einem Messdatensatz 150 zugeführt.

In einem weiteren Schritt 130 wird überprüft, ob das Erfassungssignal einen zweiten Empfangslichtpuls aufweist. Sofern diese Prüfbedingung WAHR ist, wird in einem weiteren Schritt 140 die Laufzeit bzw. der zugeordnete Abstand des zweiten Empfangslichtpulses ermittelt. Diese gegebenenfalls ermittelten Daten werden ebenfalls dem Messdatensatz 150 zugeführt, wobei gegebenenfalls zusätzlich ein Flag hinzugefügt werden kann, welches den Messdatensatz als "transparent" kennzeichnet.

Die Schritte 110 bis 140 des ersten Verfahrensabschnitts 100 können beispielsweise in einem FPGA durchgeführt werden.

Anschließend wird der Messdatensatz 150 im Rahmen des zweiten Verfahrensabschnitts 200 weiterverarbeitet. Dieser Verfahrensabschnitt 200 sieht zumindest drei Prüfschritte 210, 220, 230 vor, wobei in jedem Prüfschritt eine jeweilige Prüfbedingung abgeprüft wird bzw. abgeprüft werden kann. Der zweite Verfahrensabschnitt 200 kann beispielsweise in einem Signalprozessor durchgeführt werden.

In dem ersten Prüfschritt 210 wird geprüft, ob die Anzahl der Empfangslichtpulse gleich 1 ist. Wenn die im ersten Prüfschritt 210 geprüfte erste Prüfbedingung WAHR ist, wird zu einem Schritt 240 gesprungen.

In Schritt 240 erfolgt das Bestimmen des Abstandes auf der Grundlage der für den ersten Empfangslichtpuls ermittelten Laufzeit.

Wenn die in dem ersten Prüfschritt 210 geprüfte erste Prüfbedingung FALSCH ist, wird zu dem zweiten Prüfschritt 220 gesprungen.

Im zweiten Prüfschritt 220 wird gemäß einer zweiten Prüfbedingung geprüft, ob für zumindest einen benachbarten Drehwinkel ein Vergleichsobjekt erfasst wurde, dessen zugeordneter Empfangslichtpuls im Wesentlichen die gleiche Laufzeit aufweist wie der erste Empfangslichtpuls. Mit anderen Worten wird im zweiten Prüfschritt geprüft, ob ein Kantentreffer vorliegt. Wenn die zweite Prüfbedingung WAHR ist, wird zu Schritt 240 gesprungen.

Wenn die zweite Prüfbedingung FALSCH ist, wird zu dem dritten Prüfschritt 230 gesprungen.

Im dritten Prüfschritt 230 wird gemäß einer dritten Prüfbedingung geprüft, ob für zumindest einen benachbarten Drehwinkel ein Reflektor erfasst wurde, dessen zugeordneter Empfangslichtpuls im Wesentlichen die gleiche Laufzeit aufweist wie der zweite Empfangslichtpuls. Mit anderen Worten wird hier geprüft, ob im Hintergrund ein Reflektor, insbesondere Retroreflektor, vorhanden ist.

Wenn die dritte Prüfbedingung WAHR ist, wird zu Schritt 240 gesprungen.

Wenn die dritte Prüfbedingung FALSCH ist, wird zu einem Schritt 250 gesprungen.

In Schritt 250 wird der Abstand auf der Grundlage der für den zweiten Empfangslichtpuls ermittelten Laufzeit bestimmt.

An die Schritte 240 bzw. 250 können sich weitere Verfahrensschritte anschließen, beispielsweise das Bestimmen einer jeweiligen Position des erfassten Objekts auf der Grundlage des Drehwinkels und des gemäß Schritt 240 oder 250 ermittelten Abstandes.

Daran anschließend können beispielsweise noch weitere (Prüf-)Schritte durchgeführt werden, beispielsweise ob sich die ermittelte Position innerhalb eines vorbestimmten Schutzfeldes befindet.

Gemäß einer nicht dargestellten Abwandlung kann die Reihenfolge der in dem zweiten Prüfschritt 220 und dem dritten Prüfschritt 230 geprüften Prüfbedingungen auch getauscht werden, d.h. in dem zweiten Prüfschritt 220 wird geprüft, ob im Hintergrund ein Reflektor vorhanden ist und in dem dritten Prüfschritt 230 wird geprüft, ob ein Kantentreffer vorliegt.

Die Prüfung der ersten Prüfbedingung im Prüfschritt 210 kann nicht nur durch eine Analyse des Messdatensatzes 150 erfolgen, bei welcher (ggf. zum zweiten Mal) das Vorhandensein eines zweiten Empfangslichtpulses geprüft wird und ggf. dessen zugeordneter Abstand ermittelt wird, sondern alternativ oder zusätzlich auch durch Auswertung des Messdatensatzes 150 auf Vorhandensein des Transparenz-Flags.

Der FPGA und der Signalprozessor können in einer Steuereinheit bzw. einer Auswerte- und Steuereinheit des abstandsmessenden Überwachungssensors 10 (Fig. 2 bis 4) integriert sein.

Gemäß einer nicht dargestellten Abwandlung können die Prüfschritte 210 bis 230 unabhängig vom Ausgang eines vorherigen Prüfschritts stets durchgeführt werden, wobei die entsprechenden Wahrheitswerte dieser Prüfungen beispielsweise in Form von jeweiligen Flags im Messdatensatz 150 gespeichert werden können. Im Anschluss an die Durchführung der drei Prüfschritte 210 bis 230 kann dann eine Auswertung der Flags erfolgen, wobei auf der Grundlage dieser Auswertung dann entschieden wird, ob Schritt 240 oder Schritt 250 durchgeführt wird. Nur wenn alle drei Wahrheitswerte FALSCH sind, wird Schritt 250 durchgeführt, wenn jedoch einer oder mehrere der Wahrheitswerte WAHR sind, wird stets Schritt 240 durchgeführt.

### Bezugszeichenliste

- 10: Überwachungssensor
- 11: Schutzfeld
- 12, 12a, 12b: Objekt
- 14: Reflektor
- 16: Hintergrundobjekt
- 17, 17b: okkludierendes Objekt
- 18, 18a 18b: ausgesendeter Lichtpuls
- 20: Streulicht
- 22: erster Empfangslichtpuls
- 24: zweiter Empfangslichtpuls
- 30: Roherfassungssignal
- 32: Erfassungssignal

- 100: erster Verfahrensabschnitt
- 200: zweiter Verfahrensabschnitt
- 110, 120, 130, 140: Schritte des ersten Verfahrensabschnittes
- 150: Messdatensatz
- 210, 220, 230: Prüfschritte des zweiten Verfahrensabschnittes
- 240, 250: Abstandsermittlungsschritte des zweiten Verfahrensabschnittes

- D [m]: Abstand in Metern

## Patentansprüche

1. Verfahren zum Betreiben eines abstandsmessenden Überwachungssensors (10) zur Erfassung und Positionsbestimmung von Objekten (12, 12a, 12b) in einem zumindest zweidimensionalen Schutzfeld (11), wobei der Überwachungssensor (10) zumindest einen Lichtsender, welcher zum Aussenden von Lichtpulsen (18) in das Schutzfeld (11) eingerichtet ist, zumindest einen Lichtempfänger, welcher dazu eingerichtet ist, von zumindest einem gegebenenfalls in dem Schutzfeld (11) vorhandenen Objekt (12, 12a, 12b) reflektierte oder remittierte Lichtpulse als Empfangslichtpulse (22, 24) zu empfangen, und einer Ablenkeinheit, welche zum periodischen Abtasten zumindest des Schutzfeldes (11) mit den ausgesendeten Lichtpulsen (18) eingerichtet ist, wobei aus einem Drehwinkel der Ablenkeinheit und aus dem in Abhängigkeit von der Laufzeit eines jeweiligen Empfangslichtpulses ermittelten Abstand die jeweilige Position des zumindest einen Objekts (12, 12a, 12b) bestimmbar ist, mit den Schritten:
a) Erfassen eines jeweiligen Erfassungssignals (30, 32), welches einen jeweiligen zeitlichen Verlauf eines von dem Lichtempfänger für einen jeweiligen Drehwinkel empfangenen Empfangssignals umfasst,
b) Ermitteln der Anzahl von Empfangslichtpulsen (22, 24), welche in einem jeweiligen Erfassungssignal (30, 32) enthalten sind, wobei derjenige Empfangslichtpuls (22, 24) mit der kürzesten Laufzeit einen ersten Empfangslichtpuls (22) und ein gegebenenfalls vorhandener Empfangslichtpuls (22, 24) mit einer längeren Laufzeit einen zweiten Empfangslichtpuls (24) darstellt,
c) Erzeugen eines Detektionssignals für ein jeweiliges erfasstes Objekt (12, 12a, 12b), wobei das Detektionssignal Informationen über die ermittelte Position des Objekts (12, 12a, 12b) umfasst,
**dadurch gekennzeichnet, dass**
das Verfahren zumindest die drei folgenden Prüfbedingungen umfasst und das Ermitteln der Position das Bestimmen des Abstandes in Abhängigkeit von einem jeweiligen logischen Wahrheitswert zumindest einer der Prüfbedingungen erfolgt, wobei
- gemäß einer ersten Prüfbedingung geprüft wird, ob die Anzahl von Empfangslichtpulsen (22, 24) in einem jeweiligen Empfangssignal gleich 1 ist,
- gemäß einer zweiten Prüfbedingung geprüft wird, ob für zumindest einen benachbarten Drehwinkel ein Vergleichsobjekt erfasst wurde, dessen zugeordneter Empfangslichtpuls (22, 24) die gleiche oder zumindest im Wesentlichen, das heißt im Rahmen der Messgenauigkeit des Überwachungssensors, die gleiche Laufzeit aufweist wie der erste Empfangslichtpuls (22),
- gemäß einer dritten Prüfbedingung geprüft wird, ob für zumindest einen benachbarten Drehwinkel ein Reflektor erfasst wurde, dessen zugeordneter Empfangslichtpuls (22, 24) die gleiche oder zumindest im Wesentlichen, das heißt im Rahmen der Messgenauigkeit des Überwachungssensors, die gleiche Laufzeit aufweist wie der zweite Empfangslichtpuls (24),
wobei in einem ersten Prüfschritt die erste Prüfbedingung, in einem gegebenenfalls durchgeführten zweiten Prüfschritt entweder die zweite oder die dritte Prüfbedingung und in einem gegebenenfalls durchgeführten dritten Prüfschritt die bis dahin nicht geprüfte dritte oder zweite Prüfbedingung geprüft wird, und
wobei das Bestimmen des Abstandes auf der Grundlage der für den zweiten Empfangslichtpuls (22, 24) ermittelten Laufzeit erfolgt, wenn der Wahrheitswert der ersten, zweiten und dritten Prüfbedingung jeweils FALSCH ist, und ansonsten auf der Grundlage der für den ersten Empfangslichtpuls (22, 24) ermittelten Laufzeit erfolgt.

2. Verfahren nach Anspruch 1,
wobei weitere der drei Prüfbedingungen nicht mehr geprüft werden, wenn der Wahrheitswert einer zuvor geprüften Prüfbedingung WAHR ist.

3. Verfahren nach Anspruch 1,
wobei zunächst der erste, zweite und dritte Prüfschritt durchgeführt werden und in einem nachfolgenden Auswerteschritt die Wahrheitswerte der zugeordneten Prüfbedingungen ausgewertet werden, wobei auf der Grundlage der genannten Bedingungen für die Wahrheitswerte ermittelt wird, ob der Abstand auf der Grundlage der Laufzeit des ersten oder des zweiten Empfangslichtpulses (22, 24) zu bestimmen ist.

4. Verfahren nach einem der vorhergehenden Ansprüche,
wobei Schritt a) ein Quantisieren des Erfassungssignals (30, 32) umfasst.

5. Verfahren nach einem der vorhergehenden Ansprüche,
wobei in einem auf Schritt c) folgenden Schritt d) ein Alarmsignal oder ein Abschaltsignal ausgegeben wird, wenn zumindest ein jeweiliges Detektionssignal zumindest eine vorgegebene Alarmbedingung erfüllt.

6. Verfahren nach einem der vorhergehenden Ansprüche,
wobei in Schritt b) das Ermitteln der Anzahl von Empfangslichtpulsen (22, 24) umfasst, dass für ein oder mehrere im Erfassungssignal (30, 32) vorhandene lokale Maxima ermittelt wird, ob ein oder mehrere, für eine Identifizierung als Empfangslichtpuls (22, 24) notwendige Kriterien erfüllt sind, wobei die Kriterien aus einer Gruppe ausgewählt sind, welche eine vorgegebene Höhe, Breite und/oder Pulsform umfasst.

7. Verfahren nach einem der vorhergehenden Ansprüche,
wobei das Überprüfen der dritten Prüfbedingung, ob für einen benachbarten Drehwinkel ein Reflektor (14) erfasst wurde, umfasst, dass die Intensität eines für den zumindest einen benachbarten Drehwinkel zugeordneten Empfangslichtpulses (22, 24) ausgewertet wird, bevorzugt dass sie mit einem fest oder dynamisch vorgegebenen Intensitätsschwellenwert verglichen wird.

8. Verfahren nach einem der vorhergehenden Ansprüche,
wobei der Überwachungssensor (10) ein Laserscanner ist, welcher zur Überwachung von einer oder mehreren Abtastflächen ausgelegt ist.

9. Abstandsmessender Überwachungssensor (10) zur Erfassung und Positionsbestimmung von Objekten (12, 12a, 12b) in einem zumindest zweidimensionalen Schutzfeld (11), wobei der Überwachungssensor (10) zumindest einen Lichtsender, zumindest einen Lichtempfänger, eine Ablenkeinheit und eine Steuereinheit umfasst, wobei die Steuereinheit zum Durchführen des Verfahrens gemäß einem der vorhergehenden Ansprüche ausgelegt ist.

## Claims

1. A method of operating a distance-measuring monitoring sensor (10) for the detection and position determination of objects (12, 12a, 12b) in an at least two-dimensional protected field (11), wherein the monitoring sensor (10) comprises at least one light transmitter which is configured to transmit light pulses (18) into the protected field (11); at least one light receiver which is configured to receive light pulses as reception light pulses (22, 24) which are reflected or remitted by at least one object (12, 12a, 12b) possibly present in the protected field (11); and a deflection unit which is configured to periodically scan at least the protected field (11) with the transmitted light pulses (18), wherein the respective position of the at least one object (12, 12a, 12b) can be determined from an angle of rotation of the deflection unit and from the distance determined in dependence on the time of flight of a respective reception light pulse, said method comprising the steps:
a) detecting a respective detected signal (30, 32) which comprises a respective time curve of a reception signal received by the light receiver for a respective angle of rotation;
b) determining the number of reception light pulses (22, 24) which are included in a respective detected signal (30, 32), with that reception light pulse (22, 24) which has the shortest time of flight representing a first reception light pulse (22) and a possibly present reception light pulse (22, 24) which has a longer time of flight representing a second reception light pulse (24); and
c) generating a detection signal for a respective detected object (12, 12a, 12b), with the detection signal comprising information on the determined position of the object (12, 12a, 12b),
**characterized in that**
the method comprises at least the three following test conditions and the determination of the position and the determination of the distance take place in dependence on a respective logical truth value of at least one of the test conditions, wherein
- a check is made in accordance with a first test condition whether the number of reception light pulses (22, 24) in a respective reception signal is equal to 1;
- a check is made in accordance with a second test condition whether a comparison object, whose associated reception light pulse (22, 24) has the same or at least substantially, i.e. within the framework of the measurement accuracy of the monitoring sensor, the same time of flight as the first reception light pulse (22), was detected for at least one adjacent angle of rotation; and
- a check is made in accordance with a third test condition whether a reflector, whose associated reception light pulse (22, 24) has the same or at least substantially, i.e. within the framework of the measurement accuracy of the monitoring sensor, the same time of flight as the second reception light pulse (22), was detected for at least one adjacent angle of rotation,
wherein the first test condition is checked in a first test step, either the second or third test condition is checked in a possibly performed second test step and the third or second test condition which has not been checked up to then is checked in a possibly performed third test step, and
wherein the determination of the distance takes place on the basis of the time of flight determined for the second reception light pulse (22, 24) if the truth value of the first, second and third test conditions is FALSE in each case and otherwise takes place on the basis of the time of flight determined for the first reception light pulse (22, 24).

2. A method in accordance with claim 1,
wherein further ones of the three test conditions are no longer checked if the truth value of a previously checked test condition is TRUE.

3. A method in accordance with claim 1,
wherein the first, second and third test steps are first carried out and the truth values of the associated test conditions are evaluated in a subsequent evaluation step, with a determination being made on the basis of said conditions for the truth values whether the distance is to be determined on the basis of the time of flight of the first or second reception light pulse (22, 24).

4. A method in accordance with any one of the preceding claims,
wherein step a) comprises a quantization of the detected signal (30, 32).

5. A method in accordance with any one of the preceding claims,
wherein an alarm signal or a shutdown signal is output in a step d) following step c) if at least one respective detection signal satisfies at least one predefined alarm condition.

6. A method in accordance with any one of the preceding claims,
wherein the determination of the number of reception light pulses (22, 24) in step b) comprises a determination being made for one or more local maxima present in the detected signal (30, 32) whether one or more criteria are satisfied which are necessary for an identification as a reception light pulse (22, 24), with the criteria being selected from a group which comprises a predefined height, width and/or pulse shape.

7. A method in accordance with any one of the preceding claims,
wherein the check of the third test condition whether a reflector (14) was detected for an adjacent angle of rotation comprises the intensity of a reception light pulse (22, 24) associated with the at least one adjacent angle of rotation being evaluated and preferably being compared with a fixedly or dynamically predefined intensity threshold value.

8. A method in accordance with any one of the preceding claims,
wherein the monitoring sensor (10) is a laser scanner which is adapted to monitor one or more scanning surfaces.

9. A distance-measuring monitoring sensor (10) for the detection and position determination of objects (12, 12a, 12b) in an at least two-dimensional protected field (11), wherein the monitoring sensor (10) comprises at least one light transmitter; at least one light receiver; a deflection unit; and a control unit, with the control unit being adapted to carry out the method in accordance with any one of the preceding claims.

## Revendications

1. Procédé pour faire fonctionner un capteur de surveillance (10) de mesure de distance pour détecter et déterminer la position d'objets (12, 12a, 12b) dans un champ de protection (11) au moins bidimensionnel, le capteur de surveillance (10) comportant au moins un émetteur de lumière conçu pour émettre des impulsions lumineuses (18) dans le champ de protection (11), au moins un récepteur de lumière conçu pour recevoir, en tant qu'impulsions lumineuses de réception (22, 24), des impulsions lumineuses réfléchies ou renvoyées par au moins un objet (12, 12a, 12b) le cas échéant présent dans le champ de protection (11), et une unité de déviation conçue pour balayer périodiquement au moins le champ de protection (11) avec les impulsions lumineuses émises (18), la position respective dudit au moins un objet (12, 12a, 12b) pouvant être déterminée à partir d'un angle de rotation de l'unité de déviation et de la distance déterminée en fonction du temps de parcours d'une impulsion lumineuse de réception respective, comprenant les étapes consistant à :
a) détecter un signal de détection respectif (30, 32) qui inclut une évolution temporelle respective d'un signal de réception reçu par le récepteur de lumière pour un angle de rotation respectif,
b) déterminer le nombre d'impulsions lumineuses de réception (22, 24) incluses dans un signal de détection respectif (30, 32), où l'impulsion lumineuse de réception (22, 24) ayant le temps de parcours le plus court représente une première impulsion lumineuse de réception (22), et une impulsion lumineuse de réception (22, 24), le cas échéant présent, ayant un temps de parcours plus long représente une deuxième impulsion lumineuse de réception (24),
c) générer un signal de détection pour un objet détecté respectif (12, 12a, 12b), le signal de détection incluant des informations sur la position déterminée de l'objet (12, 12a, 12b),
**caractérisé en ce que**
le procédé comprend au moins les trois conditions de test suivantes, et la détermination de la position inclut la détermination de la distance en fonction d'une valeur de vérité logique respective de l'une au moins des conditions de test, sachant que
- selon une première condition de test, on vérifie si le nombre d'impulsions lumineuses de réception (22, 24) dans un signal de réception respectif est égal à 1,
- selon une deuxième condition de test, on vérifie si, pour au moins un angle de rotation voisin, un objet de comparaison a été détecté dont l'impulsion lumineuse de réception (22, 24) associée présente le même temps de parcours ou au moins sensiblement le même, c'est-à-dire dans le cadre de la précision de mesure du capteur de surveillance, que la première impulsion lumineuse de réception (22),
- selon une troisième condition de test, on vérifie si, pour au moins un angle de rotation voisin, un réflecteur a été détecté dont l'impulsion lumineuse de réception (22, 24) associée présente le même temps de parcours ou au moins sensiblement le même, c'est-à-dire dans le cadre de la précision de mesure du capteur de surveillance, que la deuxième impulsion lumineuse de réception (24),
dans lequel la première condition de test est vérifiée dans une première étape de test, soit la deuxième soit la troisième condition de test est vérifiée dans une deuxième étape de test effectuée le cas échéant, et la troisième ou la deuxième condition de test qui n'a pas été vérifiée jusqu'alors est vérifiée dans une troisième étape de test effectuée le cas échéant, et
dans lequel la détermination de la distance se fait sur la base du temps de parcours déterminé pour la deuxième impulsion lumineuse de réception (22, 24), si la valeur de vérité des première, deuxième et troisième conditions de test est FAUX, sinon elle se fait sur la base du temps de parcours déterminé pour la première impulsion lumineuse de réception (22, 24).

2. Procédé selon la revendication 1,
dans lequel d'autres conditions parmi les trois conditions de test ne sont plus vérifiées, si la valeur de vérité d'une condition de test précédemment vérifiée est VRAIE.

3. Procédé selon la revendication 1,
dans lequel tout d'abord les première, deuxième et troisième étapes de test sont effectuées, et dans une étape d'évaluation suivante, les valeurs de vérité des conditions de test associées sont évaluées, et
sur la base desdites conditions des valeurs de vérité, il est déterminé si la distance doit être déterminée sur la base du temps de parcours de la première ou de la deuxième impulsion lumineuse de réception (22, 24).

4. Procédé selon l'une des revendications précédentes,
dans lequel l'étape a) comprend la quantification du signal de détection (30, 32).

5. Procédé selon l'une des revendications précédentes,
dans lequel, dans une étape d) suivant l'étape c), un signal d'alarme ou un signal de coupure est émis lorsqu'au moins un signal de détection respectif satisfait à au moins une condition d'alarme prédéterminée.

6. Procédé selon l'une des revendications précédentes,
dans lequel, dans l'étape b), la détermination du nombre d'impulsions lumineuses de réception (22, 24) inclut que, pour un ou plusieurs maxima locaux présents dans le signal de détection (30, 32), il est déterminé si un ou plusieurs critères nécessaires à l'identification en tant qu'impulsion lumineuse de réception (22, 24) sont satisfaits, et
les critères sont choisis parmi un groupe comprenant une hauteur, une largeur et/ou une forme d'impulsion prédéterminées.

7. Procédé selon l'une des revendications précédentes,
dans lequel la vérification de la troisième condition de test pour savoir si un réflecteur (14) a été détecté pour un angle de rotation voisin inclut l'évaluation de l'intensité d'une impulsion lumineuse de réception (22, 24) associée audit au moins un angle de rotation voisin, de préférence en la comparant à un seuil d'intensité prédéterminé de façon fixe ou dynamique.

8. Procédé selon l'une des revendications précédentes,
dans lequel le capteur de surveillance (10) est un scanner laser adapté pour surveiller une ou plusieurs surfaces de balayage.

9. Capteur de surveillance (10) de mesure de distance pour détecter et déterminer la position d'objets (12, 12a, 12b) dans un champ de protection (11) au moins bidimensionnel, dans lequel le capteur de surveillance (10) comprend au moins un émetteur de lumière, au moins un récepteur de lumière, une unité de déviation et une unité de commande, dans lequel l'unité de commande est adaptée pour mettre en oeuvre le procédé selon l'une des revendications précédentes.
